# EUROPÄISCHE PATENTSCHRIFT

(11) **EP 2 431 205 B1**
(45) Veröffentlichungstag und Bekanntmachung des Hinweises auf die Patenterteilung: **04.05.2016**
(21) Anmeldenummer: 11181328.3
(22) Anmeldetag: 15.09.2011
(51) Int. Cl.: B60J 5/06

(54) **Befestigungsvorrichtung für einen Planenaufbau eines Nutzfahrzeugs, Nutzfahrzeugaufbau und Nutzfahrzeug mit einer derartigen Befestigungsvorrichtung**
Mounting device for a canvas cover of a commercial vehicle, commercial vehicle structure and commercial vehicle with such a mounting device
Dispositif de fixation pour un montage de superstructure d'un véhicule utilitaire, montage de véhicule utilitaire et véhicule utilitaire doté d'un tel dispositif de fixation

(30) Priorität: 15.09.2010 DE 102010045524
(43) Veröffentlichungstag der Anmeldung: 21.03.2012
(73) Patentinhaber: Kögel Trailer GmbH & Co. KG, 89349 Burtenbach (DE)
(72) Erfinder: Eschey, Thomas, 86500 Kutzenhausen (DE)
(74) Vertreter: Kilchert, Jochen

(56) Entgegenhaltungen:
- EP-A1- 0 466 643
- DE-A1- 2 920 644
- GB-A- 1 256 892

## Beschreibung

Die Erfindung bezieht sich auf eine Befestigungsvorrichtung für einen Planenaufbau eines Nutzfahrzeugs sowie auf einen Nutzfahrzeugaufbau und ein Nutzfahrzeug mit einer derartigen Befestigungsvorrichtung.

Die erfindungsgemäße Befestigungsvorrichtung dient zur Befestigung einer Plane, beispielsweise einer seitlichen Schiebegardine wie man sie an einem LKW oder LKW-Anhänger findet, und umfasst eine sogenannte Krampenanschlagsleiste, deren besondere Ausgestaltung eine deutliche Verbesserung gegenüber den aus dem Stand der Technik bekannten Befestigungssysteme für Planenaufbauten bietet.

Aus dem Stand der Technik sind Planenaufbauten für LKWs, deren Anhänger und sonstige denkbare Ladeflächen grundsätzlich bekannt. Es gibt verschiedene Ausführungen, denen aber gemeinsam ist, dass sich eine Plane als Abdeckung von oben herab über Dachholme oder dergleichen erstreckt und an einer oberen Kante eines Außenrahmens der tragenden Struktur des Nutzfahrzeugs oder an einer sich aufwärts erstreckenden Bordwand lösbar befestigt werden soll. Dieses grundlegende System ist für Ladeflächen unterschiedlicher Größe identisch.

Die DE 29 20 644 A1 beschreibt eine Bordwand für den Aufbau von Nutzfahrzeugen, wobei ein Planösenprofil mit mindestens einem Führungsschlitz ausgebildet ist, in den eine Planösenstange oder dergleichen eingeschoben werden kann. Hierbei ist die Planösenstange mit mehreren Krampen bestückbar, die mit der Planösenstange beispielsweise vernietet, verschweißt oder verschraubt sind. Auch in der EP 0 825 049 B1 wird eine Verriegelungsvorrichtung für eine Plane beschrieben. Diese umfasst an der Plane befestigte Spanngurte, Spannhaken und mindestens eine Spannvorrichtung zwischen den Spanngurten und den Spannhaken, wobei die Spannhaken an einer gemeinsamen Welle angeordnet sind, die im Rahmen eines Fahrzeugs gelagert und mit der Spannvorrichtung verbunden ist. Ferner wird in der EP 1 710 108 A2 eine Vorhanganordnung für Fahrzeuge mit Seitenplane beschrieben, wobei die Seitenplane über eine Feder mit mehreren Befestigungsmitteln verbunden ist. Die Befestigungsmittel sind mittels Rollen verschiebbar in einer Schiene angeordnet.

Die vorliegende Erfindung geht von einer bekannten Anordnung aus, dass ein unterer, horizontal verlaufender Bereich der zu sichernden Plane mit dem Außenrahmen des Nutzfahrzeugs verbunden wird. Hierzu ist am Außenrahmen eine Leiste vorgesehen, auf der sich Befestigungsmittel befinden. Diese können beispielsweise in Gestalt von Krampen ausgebildet sein, die weitestgehend senkrecht zur Leiste aus dieser herausragen. Im befestigten Zustand der Plane können diese abstehenden Krampen durch Öffnungen in der Plane hindurchreichen, die entlang eines unteren, horizontal verlaufenden streifenförmigen Bereichs der Plane angeordnet sind. Im befestigten Zustand der Plane sind dann Sicherungsmittel an den Krampen angebracht, die ein Abgleiten der Plane von den Krampen verhindern. Um eine gleichmäßige Befestigung der Plane an der Leiste bzw. dem Außenrahmen zu gewährleisten, sind die Krampen vorzugsweise in regelmäßigen Abständen entlang der Leiste angebracht. Die aufzubringende Plane wiederum weist Öffnungen in entsprechenden Abständen auf, die ausreichend dimensioniert sind, um über die Krampen geschoben zu werden.

Die erwähnten Sicherungsmittel bestehen in bekannten Fällen aus einzelnen Sicherungsmitteln, die jede Krampe separat absichern, oder vorzugsweise aus einer durchlaufenden Leine oder dergleichen, die entlang des Außenrahmens durch die Krampen hindurchgeschoben bzw. -gezogen wird. Die Plane befindet sich dann zwischen der Leine und der Leiste bzw. dem Außenrahmen.

Der horizontal verlaufende Bereich, auf dem die aus der Leiste herausragenden Krampen angebracht sind, wird oftmals auch als "Krampenband", "Krampenanschlag" oder "Krampenanschlagsband" bezeichnet. Beim Beladen oder Entladen kommt es durch die exponierte Position der Krampen, die aus dem Krampenband herausragen, oftmals zu unerwünschten Beschädigungen sowohl an den Krampen als auch möglicherweise an den Beladungsvorrichtungen. Nachteilig ist außerdem, dass eine Beladungsvorrichtung gar nicht ganz bis an den Außenrahmen bzw. die Ladekante herangefahren werden kann.

Um ein seitliches Verrutschen von Ladegut zusätzlich zu dessen Sicherung zu verhindern, weisen die oberen Kanten bzw. die Ladekante des Außenrahmens oftmals Erhöhungen gegenüber der Ladefläche auf. In jedem Fall weisen derartige Erhöhungen im beladenen und transportfertigen Zustand zwar eine klaren Vorteil hinsichtlich der Sicherung der Ladung auf; beim Vorgang des Beladens und des Entladens stellt eine derartige Erhöhung jedoch ein Hindernis für beispielsweise einen Gabelstapler oder sonstige Beladungsvorrichtungen dar. Auch hierdurch kann es zu Beschädigungen bei den Beladungsvorrichtungen und darüber hinaus auch am Ladegut kommen.

Der Nachteil der aus der Praxis bekannten Befestigungsvorrichtungen, insbesondere Krampenbänder, besteht also darin, dass die funktionsbedingt notwendigen, aus dem Krampenband herausragenden Krampen leicht beschädigt werden und ebenso leicht Beschädigungen an den Beladungsvorrichtungen hervorrufen. Zu einer Sicherung des Ladegutes können sie generell nicht beitragen.

Es ist somit Aufgabe der vorliegenden Erfindung, eine Befestigungsvorrichtung aufzuzeigen, die die beschriebenen Beschädigungen weitgehend verhindert. Gleichzeitig ist es ein weiteres Ziel, die bekannten Erhöhungen der Ladekanten zur Sicherung von Ladungsgut so zu integrieren, dass der Sicherungseffekt erhalten bleibt, jedoch die nachteilige Behinderung beim Be- und Entladungsvorgang entfällt.

Ferner liegt der Erfindung die Aufgabe zugrunde, einen darauf abgestimmten Nutzfahrzeugaufbau und ein Nutzfahrzeug mit einem derartigen Nutzfahrzeugaufbau bzw. einer derartigen Befestigungsvorrichtung anzugeben.

Erfindungsgemäß wird diese Aufgabe im Hinblick auf die Befestigungsvorrichtung durch den Gegenstand des Anspruchs 1, im Hinblick auf den Nutzfahrzeugaufbau durch den Gegenstand des Anspruchs 8 und im Hinblick auf das Nutzfahrzeug durch den Gegenstand des Anspruchs 15 gelöst.

Die Erfindung beruht auf den Gedanken, eine Befestigungsvorrichtung für einen Planenaufbau eines Nutzfahrzeugs anzugeben. Die Befestigungsvorrichtung umfasst ein Krampenband mit einer Mehrzahl von Krampen, die aus dem Krampenband herausragen. Ferner weist die Befestigungsvorrichtung mindestens einen Träger und mindestens ein den Träger mit dem Krampenband verbindendes Bewegungselement auf. Das Bewegungselement wirkt mit dem Krampenband und mit dem Träger derart zusammen, dass das Krampenband von einer Verschlussposition, in der das Krampenband an dem Träger anliegt oder zumindest abschnittsweise mit dem Träger fluchtet, in eine Ladeposition verschwenkbar ist, in der das Krampenband gegenüber dem Träger ausgelenkt ist, insbesondere mit dem Träger fluchtet.

Die der Erfindung zugrunde liegende Idee beruht darauf, eine Befestigungsvorrichtung umfassend ein Krampenband anzugeben, dass aus seiner für den Befestigungsvorgang notwendigen Position herausgeschwenkt werden kann. Dies geschieht vorzugsweise durch wenigstens ein Bewegungsmittel, das ein Schwenken des Krampenbandes um eine entlang des Krampenbandes an dessen unteren Ende verlaufende Achse ermöglicht, so dass im herabgeschwenkten Zustand die Krampen nicht mehr in einer von dem Außenrahmen abstehenden Richtung angeordnet sind, sondern nunmehr eine flache Rückseite des Krampenbandes auswärts zeigt und die auf dem Krampenband angeordneten Krampen in Richtung des Außenrahmens bzw. der Ladefläche unterhalb der Ladekante gerichtet sind. Der Träger kann in der Verschlussposition sowohl seitlich neben dem Krampenband (fluchtende Anordnung), als auch zwischen dem Krampenband und einem Außenrahmen eines Nutzfahrzeugs (anliegende Anordnung) positioniert sein.

Der Vorteil der erfindungsgemäßen Befestigungsvorrichtung besteht darin, dass das Krampenband zum Be- und Entladen des Nutzfahrzeugs abklappbar ist, so dass eine Beschädigung der Krampen durch eine Beladungsvorrichtung oder die Beschädigung der Beladungsvorrichtung vermieden wird. Durch den Schwenkmechanismus, der den Wechsel zwischen der Verschlussposition und der Ladeposition des Krampenbandes bewirkt, ist eine einfache Handhabung sichergestellt. Die erfindungsgemäße Befestigungsvorrichtung ermöglicht also eine einfache und schnelle Fixierung einer Plane des Nutzfahrzeugs am Außenrahmen und gleichzeitig einen effizienten Be- und Entladevorgang, da in der abgeklappten Ladeposition ein Anfahren einer Beladungsvorrichtung direkt an die Ladekante bzw. den Außenrahmen des Nutzfahrzeugaufbaus ermöglicht ist.

Die vorgenannten Vorteile kommen insbesondere dann zum Tragen, wenn der Träger gemäß einer bevorzugten Ausgestaltung der Erfindung mit einem Nutzfahrzeug, insbesondere mit einem Außenrahmen eines Nutzfahrzeugs, verbindbar ist.

Konkret kann das Krampenband eine Frontfläche und eine Rückenfläche umfassen. Die Krampen sind vorzugsweise an der Frontfläche angeordnet. Die Rückenfläche kann in der Verschlussposition an einer Außenfläche des Trägers anliegen. Die Frontfläche weist also in der Verschlussposition von dem Außenrahmen bzw. der Ladefläche des Nutzfahrzeugs weg, so dass die Krampen nach außen vom Nutzfahrzeug abstehen. Die Rückenfläche, die vorzugsweise parallel zur Frontfläche angeordnet ist, liegt in der Verschlussposition bündig an der Außenfläche des Trägers an (Träger zwischen Krampenband und Nutzfahrzeug) oder fluchtet mit der Innenfläche des Trägers (Träger seitlich neben Krampenband). Vorzugsweise verlaufen sowohl die Frontfläche, als auch die Rückenfläche parallel entlang des Außenrahmens des Nutzfahrzeugs.

In der Ladeposition kann die Rückenfläche mit der Außenfläche des Trägers fluchten. Mit anderen Worten ist die Rückenfläche in der Ladeposition vorzugsweise in derselben Ebene wie die Außenfläche des Trägers angeordnet. Dabei können die Rückenfläche und die Außenfläche gemeinsam eine Anschlagfläche bilden, die parallel zum Außenrahmen des Nutzfahrzeugs angeordnet ist. Eine Beladungsvorrichtung, beispielsweise ein Gabelstapler oder dergleichen, kann beim Be- und Entladen des Nutzfahrzeugs bis an die Anschlagfläche herangeführt werden.

Gemäß einer bevorzugten Ausführungsform der erfindungsgemäßen Befestigungsvorrichtung weist der Träger einen Befestigungsarm auf, der zum Umgreifen einer Ladekante des Außenrahmens angepasst ist. Damit wird erreicht, dass zumindest ein Abschnitt des Trägers in einen Innenraum des Nutzfahrzeugs bzw. Nutzfahrzeugaufbaus hineinragt. Bei geschlossener Plane ist somit zumindest dieser Abschnitt des Trägers von außen nicht mehr erreichbar, so dass der Befestigungsarm eine zollsichere Fixierung des Trägers an einem Nutzfahrzeug bzw. einem Außenrahmen ermöglicht.

Das Krampenband kann ferner eine Höhe aufweisen, die höchstens die Höhe des Trägers entspricht. Dadurch wird vermieden, dass das Krampenband in der Verschlussposition über den Träger vorsteht bzw. den Träger überragt. Bei Anordnung der Befestigungsvorrichtung an einen Außenrahmen eines Nutzfahrzeugs wird auf diese Weise sichergestellt, dass die gesamte Ladeöffnung des Nutzfahrzeugs auch in der Verschlussposition des Krampenbands zugänglich ist.

Alternativ kann das Krampenband eine Höhe aufweisen, die größer als die Höhe des Trägers ist. Das Krampenband kann den Träger überragen. Wenn die Befestigungsvorrichtung an einem Nutzfahrzeug, insbesondere einem Außenrahmen eines Nutzfahrzeugs angebracht ist, kann das Krampenband in der Verschlussposition zusätzlich zur Ladungssicherung, insbesondere als Palettenanschlag, genutzt werden. Dabei ist vorteilhafterweise vorgesehen, dass das Krampenband in der Verschlussposition arretierbar ist.

Gemäß einem nebengeordneten Aspekt beruht die Erfindung auf dem Gedanken, einen Nutzfahrzeugaufbau umfassend eine zuvor beschriebene Befestigungsvorrichtung anzugeben.

Der Nutzfahrzeugaufbau zeichnet sich in einer bevorzugten Ausgestaltung dadurch aus, dass der Träger der Befestigungsvorrichtung wenigstens ein Befestigungsmittel aufweist, das den Träger fest mit einem Außenrahmen des Nutzfahrzeugaufbaus verbindet. Als Befestigungsmittel sind insbesondere Schrauben oder Nieten vorgesehen. Die Verbindung zwischen dem Träger und dem Außenrahmen kann auch durch eine Schweißnaht erfolgen.

Der Träger kann ferner wenigstens ein Sicherungsmittel aufweisen, das im Bereich des Befestigungsarms angeordnet ist. Das Sicherungsmittel kann den Träger manipulationssicher mit dem Außenrahmen verbinden. Vorzugsweise ist das Sicherungsmittel als Niet ausgebildet. Konkret ist vorgesehen, dass der Träger einen Befestigungsarm aufweist, der eine Ladekante des Außenrahmens umgreift.

Das Sicherungsmittel fixiert den Befestigungsarm am Außenrahmen, wobei das Sicherungsmittel vorzugsweise von außerhalb des Nutzfahrzeugs bei geschlossener Plane unzugänglich ist.

Insbesondere ist vorteilhafterweise vorgesehen, dass das Sicherungsmittel von außerhalb eines Laderaums des Nutzfahrzeugaufbaus unzugänglich und/oder ausschließlich zerstörend lösbar ist. Da das Sicherungsmittel zusätzlich im Befestigungsabschnitt angeordnet ist, der auch durch ein Hindurchgreifen der Plane im Wesentlichen nicht erreichbar ist, wird auf diese Weise eine zollsichere Verankerung des Krampenbands bzw. allgemein der Befestigungsvorrichtung erreicht. Das im Befestigungsabschnitt angeordnete Sicherungsmittel verhindert somit das unbefugte Lösen der Befestigungsvorrichtung und somit einen unbefugten Zugang zum Ladegut. Insbesondere ist die Befestigungsvorrichtung, konkret das Sicherungsmittel, derart angepasst, dass eine Demontage der Befestigungsvorrichtung ohne das Hinterlassen sichtbarer Spuren verhindert ist. Dazu ist vorgesehen, dass das Sicherungsmittel nur von einem Innenraum des Nutzfahrzeugs einsetzbar bzw. fixierbar ist. Somit wird verhindert, dass nach einer unbefugten Demontage der Befestigungsvorrichtung bei geschlossener Plane, wobei das Sicherungsmittel zerstört wird, die Befestigungsvorrichtung mit einem neuen Sicherungsmittel am Außenrahmen fixiert wird. Dies wäre nur möglich, wenn die Plane geöffnet werden kann, um die das neue Sicherungsmittel einbringenden Person aus dem Laderaum zu entlassen. Damit würde jedoch eine Zollplombe beschädigt werden, die üblicherweise an der durch die Plombe und die Krampen geführten Leine angebracht ist, so dass im Nachhinein erkennbar ist, falls ein unbefugter Zugriff auf das Ladegut bzw. in den Laderaum erfolgt ist.

Bei einer weiteren bevorzugten Ausführungsform ist vorgesehen, dass die Krampen des Krampenbands in der Verschlussposition vom Außenrahmen des Nutzfahrzeugaufbaus wegragen und in der Ladeposition unterhalb des Außenrahmens angeordnet sind. Die Krampen behindern damit in der Ladeposition den Be- und Entladevorgang nicht.

In einer besonders bevorzugten Ausgestaltung ist das Krampenband, insbesondere sind die Krampen, stets unterhalb einer Ladekante des Nutzfahrzeugaufbaus, insbesondere des Außenrahmens, angeordnet. Somit ist sichergestellt, dass die Plane im geschlossenen Zustand die gesamte Ladeöffnung des Nutzfahrzeugaufbaus überdeckt. Dies trägt einerseits zu einer Gewichtsersparnis bei, da auf starre Bordwände verzichtet werden kann, und ermöglicht andererseits eine flexible Öffnung des Nutzfahrzeugaufbaus, so dass Teile des Ladeguts schnell und effizient be- und entladen werden können. Auch bei nur teilweise Öffnung der Plane, insbesondere Seitenplane bzw. Schiebeplane, des Nutzfahrzeugaufbaus ist die vollständige Ladehöhe verfügbar, so dass einzelne Teile der Ladung schnell und effizient be- und entladen werden können.

Alternativ kann vorgesehen sein, dass das Krampenband in der Verschlussposition vertikal über die Ladekante des Nutzfahrzeugaufbaus, insbesondere des Außenrahmens, vorsteht. Dabei können die Krampen sowohl in der Verschlussposition, als auch in der Ladeposition des Krampenbands unterhalb der Ladekante angeordnet sein. Das in der Verschlussposition vertikal über die Ladekante vorstehende Krampenband kann zur Ladungssicherung, insbesondere als Palettenanschlag, dienen.

Gemäß einem weiteren nebengeordneten Aspekt beruht die Erfindung auf dem Gedanken, ein Nutzfahrzeug mit einer eingangs erläuterten Befestigungsvorrichtung oder einem zuvor beschriebenen Nutzfahrzeugaufbau anzugeben.

Die Erfindung wird im Folgenden anhand von Ausführungsbeispielen unter Bezugnahme auf die beigefügten, schematischen Zeichnungen näher erläutert. Darin zeigen
- Fig. 1: eine Querschnittsansicht einer erfindungsgemäßen Befestigungsvorrichtung gemäß einem bevorzugten Ausführungsbeispiel in Verbindung mit einem Außenrahmen eines Nutzfahrzeugaufbaus, wobei das Krampenband in der Verschlussposition angeordnet ist; und
- Fig. 2: eine Querschnittsansicht der Befestigungsvorrichtung gemäß Figur 1, wobei das Krampenband in der Ladeposition angeordnet ist.

In der nachfolgenden Beschreibung werden für gleiche und gleich wirkende Teile dieselben Bezugsziffern verwendet.

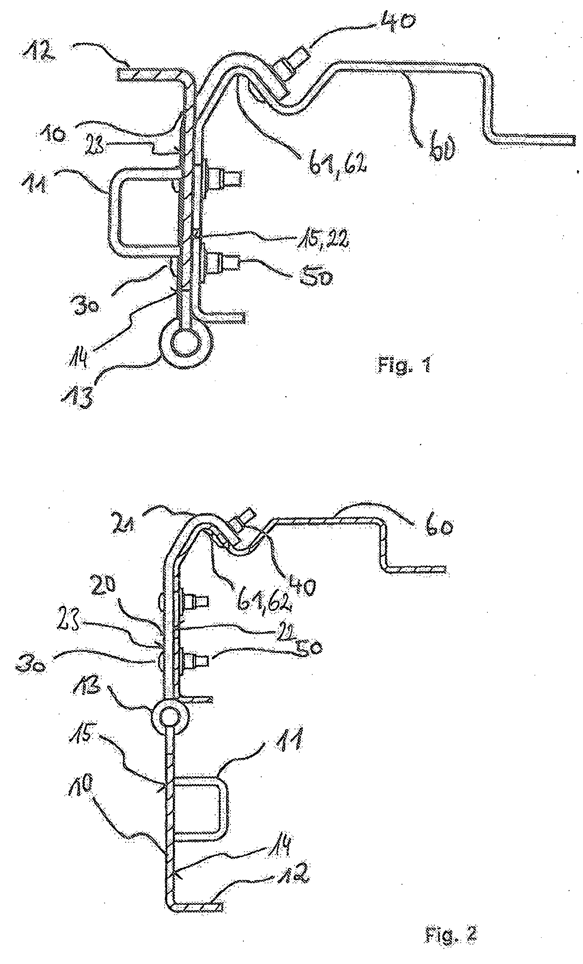

Die in Fig. 1 gezeigte Ansicht senkrecht zum Außenrahmen 60 und somit quer zur Längsrichtung eines Krampenbandes 10 in Montageposition zeigt die erfindungsgemäße Befestigungsvorrichtung. Die zu befestigende Plane ist dabei nicht dargestellt. Ebenso nicht gezeigt ist das Nutzfahrzeug mit der Ladefläche, die sich in der Darstellung rechts von der Befestigungsvorrichtung befinden würde und demzufolge von der linken Seite zu beladen wäre. Die Befestigungsvorrichtung umfasst ein Krampenband 10 mit Krampen 11, wobei in der Darstellung nur eine Krampe 11 erkennbar ist. Das Krampenband 10 weist ferner Abstandsbügel 12 auf, deren Funktion später beschrieben wird. Das Krampenband 10 ist über ein Bewegungselement 13 mit einem Träger 20 schwenkbar verbunden. Der Träger 20 ist mit dem Außenrahmen 60 über Befestigungsmittel 30, 50 verbunden. In der Darstellung der Fig. 1 ist der Außenrahmen 60 mit einer aufwärtsgerichteten Nase 61 versehen, zu der korrespondierend der Träger 20 einen über die aufwärts gerichtete Nase 61 reichenden Befestigungsarm 21 aufweist. Die Nase 61 bildet im Wesentlichen eine Ladekante 62 des Nutzfahrzeugs bzw. des Außenrahmens 60, die der Befestigungsarm 21 umgreift. Der Befestigungsarm 21 ist direkt an die Form der Ladekante bzw. des Außenrahmens 60 angepasst.

Insgesamt weist der Träger 20 ein im Wesentlichen hakenförmiges Profil auf, wobei ein oberer, abgekanteter Abschnitt des Trägers 20 den Befestigungsarm 21 bildet. Ein unterer Abschnitt des Trägers 20 ist flach ausgebildet und liegt bündig an einer vertikalen Außenwand des Außenrahmens 60 an. Der untere Abschnitt des Trägers 20 weist eine Außenfläche 22 auf, die sich im Wesentlichen parallel zum Außenrahmen 60 bzw. zu einem vertikalen Abschnitt des Außenrahmens 60 erstreckt. Ferner sind im unteren vertikalen Abschnitt des Trägers 20 bzw. des Außenrahmens 60 die Befestigungsmittel 30, 50 angeordnet. Die Befestigungsmittel umfassen vorzugsweise Schrauben oder Nieten. Alternativ kann vorgesehen sein, dass der Träger 20 mit dem Außenrahmen 60 verschweißt ist.

Der Außenrahmen 60 ist vorzugsweise als Lochaußenrahmen ausgeführt. Dabei sind im vertikalen Abschnitt des Außenrahmens 60 in regelmäßigen Abständen Ausnehmungen bzw. Löcher ausgebildet, die einerseits zur Gewichtsreduktion beitragen und andererseits als Halteelemente für Verzurrmittel dienen.

Der Träger 20 kann sich über die gesamte Außenseite des Außenrahmens 60 erstrecken, oder, wie in den Figuren dargestellt, einen vergleichsweise schmalen Bereich des Außenrahmens 60 abdecken, so dass der Träger 20 seitlich neben einem Krampenband 10 oder zwischen zwei Krampenbändern 10 anordenbar ist. Der Befestigungsarm 21 überdeckt die Nase 61 des Außenrahmens 60, so dass der Befestigungsarm 21 im Wesentlichen innerhalb des Nutzfahrzeugaufbaus angeordnet ist. Konkret erstreckt sich der Befestigungsarm 21 in einen Innenraum des Nutzfahrzeugaufbaus, insbesondere in den Laderaum des Nutzfahrzeugaufbaus, hinein. Im geschlossenen Zustand der Plane des Nutzfahrzeugaufbaus ist der Befestigungsarm 21 daher im Wesentlichen unzugänglich im Innenraum des Nutzfahrzeugaufbaus angeordnet.

Vorzugsweise weist die Befestigungsvorrichtung zwei Träger 20 auf, die seitlich neben dem Krampenband 10 angeordnet und mit dem Krampenband 10 durch das Bewegungselement 13 verbunden sind. Es ist auch möglich, dass mehr als zwei Träger 20 vorgesehen sind, wobei beispielsweise ein dritter Träger 20 mittig zwischen zwei Abschnitten des Krampenbands 10 angeordnet sein kann. Der Nutzfahrzeug-aufbau bzw. der Außenrahmen 60 kann mehrere Befestigungsvorrichtungen umfassen.

Das Bewegungselement 13 bildet eine Drehachse bzw. Schwenkachse für das Krampenband 10, so dass das Krampenband 10 über dem Träger 20 verschwenkbar ist. Das Verschwenken erfolgt vorzugsweise selbsttätig durch Lösen der Plane von den Krampen 11. Eine Arretierung des Krampenbandes 10 in der Verschlussposition ist nicht vorgesehen. Es ist jedoch durchaus möglich, eine Arretierung des Krampenbands 10 in der Verschlussposition durch geeignete Maßnahmen zu erreichen. Beispielsweise kann das Krampenband 10 an einer Rückenfläche 15 magnetische Elemente aufweisen, die das Krampenband 10 in der Verschlussposition am Außenrahmen 60 halten. Alternativ können Rastelemente, Riegel oder Beschläge vorgesehen sein, die zur Arretierung des Krampenbands 10 in der Verschlussposition geeignet sind.

Das Krampenband 10 weist eine Frontfläche 14 auf, aus der sich die Krampen 11 erheben. Die Frontfläche 14 weist in der Verschlussposition vom Nutzfahrzeugaufbau weg bzw. bildet eine sichtbare Seitenfläche des Nutzfahrzeugaufbaus. Die Rückenfläche 15 des Krampenbands 10 ist der Frontfläche 14 gegenüber angeordnet. Insbesondere erstreckt sich die Rückenfläche 15 parallel zur Frontfläche 14. In der Verschlussposition liegt die Rückenfläche 15 bündig am Außenrahmen 60, insbesondere an einer vertikalen Außenwand des Außenrahmens 60 an, wie in Figur 1 gezeigt. Alternativ kann vorgesehen sein, dass der Träger 20 in der Verschlussposition des Krampenbands 10 zwischen dem Krampenband 10 und dem Außenrahmen 60 angeordnet ist. Die Rückenfläche 15 des Krampenbandes 10 liegt dann in der Verschlussposition bündig an einer Außenfläche 23 des Trägers 20 an.

Vorzugsweise ist der Träger jedoch seitlich neben den Krampenband 10 in der Verschlussposition angeordnet. Dabei fluchtet die Rückenfläche 15 des Krampenbands 10 mit einer Innenfläche 22 des Trägers 20, wobei die Innenfläche 22 bündig am Außenrahmen 60 anliegt. Der Träger 20 und das Krampenband 10 können dieselbe Materialstärke aufweisen, so dass die Frontfläche 14 des Krampenbands 10 in der Verschlussposition mit der Außenfläche 23 des Trägers fluchtet.

Bei beiden vorgenannten Varianten, wobei der Träger 20 entweder seitlich neben dem Krampenband 10 angeordnet ist oder sich der Träger 20 in der Verschlussposition zwischen den Krampenband und dem Außenrahmen 60 erstreckt, ist die Ladeposition vorzugsweise dadurch gebildet, dass das Krampenband 10 gegenüber dem Träger 20 derart ausgelenkt ist, dass die Rückenfläche 15 des Krampenbands 10 mit der Außenfläche 23 des Trägers 20 fluchtet, wie in Figur 2 dargestellt. Entsprechend kann, bei gleichen Materialstärken, die Frontfläche 14 des Krampenbands 10 mit der Innenfläche 22 des Trägers 20 fluchten.

Fig. 2 zeigt die identische Anordnung, wobei das Krampenband 10 über das Bewegungselement 13 um 180° herabgeschwenkt ist. Die Krampen 11 sind daher in Richtung des Nutzfahrzeugaufbaus bzw. des Außenrahmens 60 gerichtet und stehen demzufolge nicht mehr der in der Darstellung von links kommenden Beladung entgegen. In dieser herabgeschwenkten Position ist es möglich, dass eine Beladungsvorrichtung bis an den Träger 20 bzw. den Außenrahmen 60 herangefahren wird. Dadurch wird der Beladungs- und Entladungsvorgang erleichtert und dennoch eine Beschädigung sowohl der Krampen 11 als auch einer solchen Beladungsvorrichtung verhindert. Um zu vermeiden, dass die Krampen 11 im herabgeklappten Zustand direkt am Außenrahmen 60 anliegen können Abstandsbügel 12 vorgesehen sein, die hauptsächlich für eine erhöhte Stabilität des Krampenbands 10 sorgen. Ferner liegt die Plane im geschlossenen Zustand an dem Abstandsbügel 12 an, so dass eine gleichmäßige Spannung der Plane erreicht und das Krampenband 10 in der Verschlussposition durch die Plane am Außenrahmen 60 gehalten wird.

Im Allgemeinen ist vorgesehen, dass das Krampenband 10 eine Zollsicherheitsfunktion erfüllt. Konkret wird durch die Krampen 11 des Krampenbands 10 ein Seil oder eine Leine geführt und verplombt, so dass die über die Krampen 11 geführten Ösen der Plane nicht ohne eine Beschädigung der Plombe oder der Leine von den Krampen 11 gelöst werden können. Die mechanische Befestigung bzw. das Spannen der Plane erfolgt durch an sich bekannte Planenspanner, die in den Außenrahmen 60, insbesondere eine untere Kante des Außenrahmens 60, eingehakt werden.

Grundsätzlich ist das Krampenband 10 zwar durchlaufend entlang des Außenrahmens 60 als ein herunterklappbares Element vorgesehen. Dies bedeutet aber nicht, dass auch der Träger 20 zwingend aus einem durchlaufenden Streifen bestehen muss. Vielmehr kann der Träger 20 zwar aus einer einzigen Grundplatte bestehen, die an mehreren Stellen mit dem Außenrahmen 60 verbunden ist, oder aber aus mehreren Trägerelementen, die in Abständen entlang der Bordkante angeordnet sind und an deren unteren Ende das Bewegungselement 13 schwenkbar befestigt ist. Auch das Bewegungselement 13 kann sich aus separaten Bewegungsmitteln, wie beispielsweise mehreren Scharnieren, zusammensetzen.

In einer weiteren, in den Figuren nicht erkennbaren, Ausführungsform ist das Krampenband 10 höher dimensioniert, so dass es im heraufgeklappten Zustand über das Niveau der Ladekante 62 bzw. Ladefläche hinausreicht. Dadurch wird ein seitliches Verschieben von Ladegut, das sich auf der Ladefläche befindet, unabhängig von sonstigen Sicherungsmaßnahmen verhindert. Hierfür wird das Krampenband 10 über weitere - in den Figuren nicht dargestellte- Arretierungsmittel in seiner heraufgeklappten Position lösbar fixiert. Derartige Arretierungsmittel sind jedoch auch für die anderen beschriebenen Ausführungsformen einsetzbar.

Wie in den Figuren 1 und 2 zu erkennen ist, ist der Träger 20 einerseits mit Befestigungsmitteln 30, 50 an dem Außenrahmen 60 fixiert. Ferner ist vorgesehen, dass der Befestigungsarm 21 des Trägers 20 zusätzlich mit einem Sicherungsmittel 40 am Außenrahmen 60, insbesondere an der Nase 61, fixiert ist. Das Sicherungsmittel kann einen Niet umfassen. Im Allgemeinen kann das Sicherungsmittel 40 entsprechend den Befestigungsmitteln 30, 50 ausgebildet sein. Das Sicherungsmittel 40 ist vorzugsweise ausschließlich vom Laderaum des Nutzfahrzeugaufbaus zugänglich. Wie in Figur 1 gut erkennbar ist, bildet der Abstandsbügel 12 in der Verschlussposition des Krampenbands 10 nicht nur einen Abstandshalter für die Plane des Nutzfahrzeugaufbaus, sondern dient gleichzeitig als Durchgriffschutz, so dass ein unbefugter Zugriff auf das Sicherungsmittel 40 im geschlossenen Zustand des Nutzfahrzeugaufbaus, also bei geschlossener Plane, verhindert ist. Das Sicherungsmittel 40 bietet somit in Verbindung mit den Befestigungsarm 21, der in den Laderaum des Nutzfahrzeugaufbaus hineinragt, die Möglichkeit, eine manipulationssichere Befestigungsvorrichtung vorzusehen, so dass ein zollsicherer Verschluss des Nutzfahrzeugaufbaus ermöglicht ist.

### Bezugszeichenliste

- 10: Krampenband
- 11: Krampe
- 12: Abstandsbügel
- 13: Bewegungselement
- 14: Frontfläche
- 15: Rückenfläche
- 20: Träger
- 21: Befestigungsarm
- 22: Innenfläche
- 23: Außenfläche
- 30, 50: Befestigungsmittel
- 40: Sicherungsmittel
- 60: Profilelement
- 61: Nase
- 62: Ladekante

## Patentansprüche

1. Befestigungsvorrichtung für einen Planenaufbau eines Nutzfahrzeugs, wobei die Befestigungsvorrichtung ein Krampenband (10) mit einer Mehrzahl von Krampen (11) umfasst, die aus dem Krampenband (10) herausragen, **gekennzeichnet durch**
mindestens einen Träger (20) und mindestens ein den Träger (20) mit dem Krampenband (10) verbindendes Bewegungselement (13) zum Verschwenken des Krampenbands (10) von einer Verschlussposition, in der das Krampenband (10) an dem Träger (20) anliegt oder zumindest abschnittsweise mit dem Träger (20) fluchtet, in eine Ladeposition, in der das Krampenband (10) gegenüber dem Träger (20) ausgelenkt ist.

2. Befestigungsvorrichtung nach Anspruch 1,
**dadurch gekennzeichnet, dass**
der Träger (20) mit einem Nutzfahrzeug, insbesondere mit einem Außenrahmen (60) eines Nutzfahrzeugs, verbindbar ist.

3. Befestigungsvorrichtung nach Anspruch 1 oder 2,
**dadurch gekennzeichnet, dass**
das Krampenband (10) eine Frontfläche (14) und eine Rückenfläche (15) umfasst, wobei die Krampen (11) an der Frontfläche angeordnet sind und die Rückenfläche in der Verschlussposition mit einer Innenfläche (22) des Trägers (20) fluchtet oder an einer Außenfläche (23) des Trägers bündig anliegt.

4. Befestigungsvorrichtung nach Anspruch 3,
**dadurch gekennzeichnet, dass**
die Rückenfläche (15) in der Ladeposition mit einer Außenfläche (23) des Trägers (20) fluchtet.

5. Befestigungsvorrichtung nach einem der Ansprüche 1 bis 4,
**dadurch gekennzeichnet, dass**
der Träger (20) einen Befestigungsarm (21) aufweist, der zum Umgreifen einer Ladekante (62) des Außenrahmens (60) angepasst ist.

6. Befestigungsvorrichtung nach einem der Ansprüche 1 bis 5,
**dadurch gekennzeichnet, dass**
das Krampenband (10) eine Höhe aufweist, die höchstens der Höhe des Trägers (20) entspricht.

7. Befestigungsvorrichtung nach einem der Ansprüche 1 bis 5,
**dadurch gekennzeichnet, dass**
das Krampenband (10) eine Höhe aufweist, die größer als die Höhe des Trägers (20) ist.

8. Nutzfahrzeugaufbau umfassend eine Befestigungsvorrichtung nach einem der Ansprüche 1 bis 4.

9. Nutzfahrzeugaufbau nach Anspruch 8,
**dadurch gekennzeichnet, dass**
der Träger (20) wenigstens ein Befestigungsmittel (30, 50) aufweist, das den Träger (20) fest mit einem Außenrahmen (60) des Nutzfahrzeugaufbaus verbindet.

10. Nutzfahrzeugaufbau nach Anspruch 8 oder 9,
**dadurch gekennzeichnet, dass**
der Träger (20) wenigstens ein Sicherungsmittel (40) aufweist, das im Bereich des Befestigungsarms (21) angeordnet ist und den Träger (20) manipulationssicher mit dem Außenrahmen (60) verbindet.

11. Nutzfahrzeugaufbau nach Anspruch 10,
**dadurch gekennzeichnet, dass**
das Sicherungsmittel (40) von außerhalb eines Laderaums des Nutzfahrzeugaufbaus unzugänglich und/oder ausschließlich zerstörend lösbar ist.

12. Nutzfahrzeugaufbau nach einem der Ansprüche 8 bis 11,
**dadurch gekennzeichnet, dass**
die Krampen (11) des Krampenbands (10) in der Verschlussposition vom Außenrahmen (60) des Nutzfahrzeugaufbaus wegragen und in der Ladeposition unterhalb des Außenrahmens (60) angeordnet sind.

13. Nutzfahrzeugaufbau nach einem der Ansprüche 8 bis 12,
**dadurch gekennzeichnet, dass**
das Krampenband (10), insbesondere die Krampen (11), stets unterhalb einer Ladekante (62) des Nutzfahrzeugaufbaus, insbesondere des Außenrahmens (60), angeordnet ist.

14. Nutzfahrzeugaufbau nach einem der Ansprüche 8 bis 12,
**dadurch gekennzeichnet, dass**
das Krampenband (10) in der Verschlussposition vertikal über eine Ladekante (62) des Nutzfahrzeugaufbaus, insbesondere des Außenrahmens (60), vorsteht.

15. Nutzfahrzeug mit einer Befestigungsvorrichtung nach einem der Ansprüche 1 bis 7 oder einem Nutzfahrzeugaufbau nach einem der Ansprüche 8 bis 14.

## Claims

1. A fastening device for a tarpaulin superstructure of a utility vehicle, wherein the fastening device comprises a staple band (10) with a plurality of staples (11) which project out of the staple band (10), **characterized by** at least one support (20) and at least one motion element (13) connecting the support (20) to the staple band (10) for pivoting the staple band (10) from a closure position, in which the staple band (10) lies against the support (20) or is at least in portions in alignment with the support (20), into a loading position, in which the staple band (10) is swivelled out relative to the support (20).

2. The fastening device according to Claim 1, **characterized in that** the support (20) can be connected to a utility vehicle, in particular to an outer frame (60) of a utility vehicle.

3. The fastening device according to Claim 1 or 2, **characterized in that** the staple band (10) comprises a front surface (14) and a back surface (15), wherein the staples (11) are arranged on the front surface and the back surface in the closure position is in alignment with an inner surface (22) of the support (20) or lies flush against an outer surface (23) of the support.

4. The fastening device according to Claim 3, **characterized in that** the back surface (15) in the loading position is in alignment with an outer surface (23) of the support (20).

5. The fastening device according to any one of the Claims 1 to 4, **characterized in that** the support (20) comprises a fastening arm (21) which is adapted for engaging about a loading edge (62) of the outer frame (60).

6. The fastening device according to any one of the Claims 1 to 5, **characterized in that** the staple band (10) has a height which at most corresponds to the height of the support (20).

7. The fastening device according to any one of the Claims 1 to 5, **characterized in that** the staple band (10) has a height which is greater than the height of the support (20).

8. A utility vehicle superstructure comprising a fastening device according to any one of the Claims 1 to 4.

9. The utility vehicle superstructure according to Claim 8, **characterized in that** the support (20) comprises at least one fastening means (30, 50), which connects the support (20) to an outer frame (60) of the utility vehicle superstructure in a fixed manner.

10. The utility vehicle superstructure according to any one of the Claim 8 or 9, **characterized in that** the support (20) comprises at least one securing means (40), which is arranged in the region of the fastening arm (21) and connects the support (20) to the outer frame (60) in a manner proof against manipulation.

11. The utility vehicle superstructure according to Claim 10, **characterized in that** the securing means (40) is inaccessible from outside a load compartment of the utility vehicle superstructure and/or exclusively detachable in a destructive manner.

12. The utility vehicle superstructure according to any one of the Claims 8 to 11, **characterized in that** the staples (11) of the staple band (10) in the closure position project away from the outer frame (60) of the utility vehicle superstructure and in the loading position are arranged below the outer frame (60).

13. The utility vehicle superstructure according to any one of the Claims 8 to 12, **characterized in that** the staple band (10), in particular the staples (11), are always arranged below a loading edge (62) of the utility vehicle superstructure, in particular of the outer frame (60).

14. The utility vehicle superstructure according to any one of the Claims 8 to 12, **characterized in that** the staple band (10) in the closure position vertically projects over a loading edge (62) of the utility vehicle superstructure, in particular of the outer frame (60).

15. A utility vehicle with a fastening device according to any one of the Claims 1 to 7 or a utility vehicle superstructure according to any one of the Claims 8 to 14.

## Revendications

1. Dispositif de fixation pour une superstructure bâchée d'un véhicule utilitaire, dans lequel le dispositif de fixation comprend une bande de crampons (10) comprenant une pluralité de crampons (11) qui font saillie de la bande de crampons (10), **caractérisé par** au moins un support (20) et au moins un élément de déplacement (13) reliant le support (20) à la bande de crampons (10) pour basculer la bande de crampons (10) d'une position de fermeture dans laquelle la bande de crampons (10) repose sur le support (20) ou est alignée au moins partiellement par tronçons avec le support (20), à une position de charge dans laquelle la bande de crampons (10) est déviée par rapport au support (20).

2. Dispositif de fixation selon la revendication 1, **caractérisé en ce que** le support (20) peut être relié à un véhicule utilitaire, en particulier à un châssis extérieur (60) d'un véhicule utilitaire.

3. Dispositif de fixation selon la revendication 1 ou 2, **caractérisé en ce que** la bande de crampons (10) comprend une face avant (14) et une face arrière (15), sachant que les crampons (11) sont disposés sur la face avant et la face arrière, dans la position de fermeture, est alignée avec une face intérieure (22) du support (20) ou repose à bords francs sur une face extérieure (23) du support.

4. Dispositif de fixation selon la revendication 3, **caractérisé en ce que** la face arrière (15) est alignée avec une face extérieure (23) du support (20) dans la position de charge.

5. Dispositif de fixation selon l'une des revendications 1 à 4, **caractérisé en ce que** le support (20) présente un bras de fixation (21) qui est adapté pour mettre en prise un bord de charge (62) du châssis extérieur (60).

6. Dispositif de fixation selon l'une des revendications 1 à 5, **caractérisé en ce que** la bande de crampons (10) présente une hauteur qui correspond au plus à la hauteur du support (20).

7. Dispositif de fixation selon l'une des revendications 1 à 5, **caractérisé en ce que** la bande de crampons (10) présente une hauteur qui est plus grande que la hauteur du support (20).

8. Superstructure de véhicule utilitaire comprenant un dispositif de fixation selon l'une des revendications 1 à 4.

9. Superstructure de véhicule utilitaire selon la revendication 8, **caractérisé en ce que** le support (20) présente au moins un moyen de fixation (30, 50) qui relie fixement le support (20) à un châssis extérieur (60) de lasuperstructure de véhicule utilitaire.

10. Superstructure de véhicule utilitaire selon la revendication 8 ou 9, **caractérisé en ce que** le support (20) présente au moins un moyen de sécurisation (40) qui est disposé au niveau du bras de fixation (21) et relie le support (20) avec le châssis extérieur (60) pour une manipulation sécurisée.

11. Superstructure de véhicule utilitaire selon la revendication 10, **caractérisé en ce que** le moyen de sécurisation (40) est inaccessible depuis l'extérieur d'un espace de charge de la superstructure de véhicule utilitaire et/ou est séparable exclusivement destructif.

12. Superstructure de véhicule utilitaire selon l'une des revendications 8 à 11, **caractérisé en ce que** les crampons (11) de la bande de crampons (10), dans la position de fermeture, font saillie du châssis extérieur (60) de la superstructure de véhicule utilitaire et sont disposés en-dessous du châssis extérieur (60) dans la position de charge.

13. Superstructure de véhicule utilitaire selon l'une des revendications 8 à 12, **caractérisé en ce que** la bande de crampons (10), en particulier les crampons (11) sont disposés en permanence en-dessous d'un bord de charge (62) de la superstructure de véhicule utilitaire, en particulier du châssis extérieur (60).

14. Superstructure de véhicule utilitaire selon l'une des revendications 8 à 12, **caractérisé en ce que** la bande de crampons (10), dans la position de fermeture, fait saillie verticalement sur un bord de charge (62) de la superstructure de véhicule utilitaire, en particulier du châssis extérieur (60).

15. Véhicule utilitaire comprenant un dispositif de fixation selon l'une des revendications 1 à 7 ou une superstructure de véhicule utilitaire selon l'une des revendications 8 à 14.
